# EUROPÄISCHE PATENTSCHRIFT

(11) **EP 1 617 541 B1**
(45) Veröffentlichungstag und Bekanntmachung des Hinweises auf die Patenterteilung: **07.05.2008**
(21) Anmeldenummer: 05014909.5
(22) Anmeldetag: 09.07.2005
(51) Int. Cl.: H02K 11/00, H02K 29/06

(54) **Direktantrieb mit Drehwinkelgeber**
Direct drive with an angular position detector
Entraînement direct avec un détecteur de position angulaire

(30) Priorität: 16.07.2004 DE 102004034636
(43) Veröffentlichungstag der Anmeldung: 18.01.2006
(73) Patentinhaber: Bosch Rexroth AG, 70184 Stuttgart (DE)
(72) Erfinder: Schnurr, Bernd, Dr., 97816 Lohr am Main (DE); Schuh, Peter, 66606 St. Wedel (DE)

(56) Entgegenhaltungen:
- DE-A1- 10 228 856
- FR-A- 2 624 669

## Beschreibung

Die Erfindung betrifft einen Direktantrieb mit einem Gehäuse, in dem ein außen liegender Stator und ein innen liegender, als Hohlwelle ausgebildeter Rotor über einen Luftspalt getrennt angeordnet sind, wobei der Rotor mit einer am Gehäuse gelagerten, sich mit einem Endabschnitt durch den Rotor erstreckenden Antriebswelle fest verbunden, und wobei ein Drehwinkelgeber an der Antriebswelle angeordnet ist, wobei der sich in den Rotor erstreckende Endabschnitt der Antriebswelle eine Ausnehmung aufweist, in der ein zur permanenten Drehwinkelerfassung dienender Drehwinkelgeber angeordnet ist.

Solche mit einem sogenannten Torquemotor ausgestatteten Direktantriebe werden unter anderem von der Firma Bosch-Rexroth als Baugruppe unter der Bezeichnung MBT angeboten. Direktantriebe mit Torquemotoren werden vor allem für Industrieanwendungen eingesetzt, bei denen Antriebe mit einem hohen Drehmoment bei kleinen Drehzahlen gefordert sind. Torquemotoren sind permanent-erregte Synchronmotoren, bei denen der innen liegende Rotor als Hohlwelle ausgebildet ist, in die eine Antriebswelle direkt ohne Zwischenschaltung eines Getriebes eingebracht werden kann. Direktantriebe mit Torquemotoren werden vor allem für Schwenkachsen und Rundtische von Werkzeugmaschinen genutzt, aber auch in der Kunststoffindustrie als Antrieb für Extruderschnecken oder als Walzantrieb in Folienziehmaschinen oder Druckmaschinen eingesetzt.

Für den Betrieb und die Steuerung des Direktantriebs mit Torquemotor ist eine permanente Drehwinkelerfassung des Rotors erforderlich. Aus der Winkelinformation des Drehwinkelgebers kann die Position des Rotors bzw. der daran angeordneten Antriebswelle bestimmt werden. Die elektrischen Ausgangssignale des Drehwinkelgebers werden dann einer Kommutiersteuerung zugeführt, die für eine phasenrichtige Bestromung der Ständerwicklungen des Stators sorgt: Der Drehwinkelgeber ist in der Regel an der Antriebswelle des Direktantriebs, die fest am Rotor verbunden ist, angeordnet und als Drehgeber oder Hohlwellengeber ausgelegt.

Der Drehgeber weist eine Drehwelle auf, die in festem Eingriff mit der Antriebswelle des Direktantriebs steht und.die Antriebswellen- bzw. Rotorposition auf den Drehgeber überträgt und in ein elektrisches Signal umsetzt. Der Hohlwellengeber dagegen ist mit einer Hohlwelle, die über der Antriebswelle angeordnet und drehfest mit dieser verbunden ist, ausgestattet, um das Drehmoment von der Antriebswelle auf den Hohlwellengeber zu übertragen und in ein elektrisches Signal umzusetzen.

Der Direktantrieb mit Torquemotor zeichnet sich durch eine kompakte Bauform aus, bei der der Durchmesser in der Regel im Verhältnis zur Länge relativ groß ist. Die Baulänge des Direktantriebs mit Torquemotor in den bekannten Ausführungen wird dabei wesentlich auch vom Drehwinkelgeber bestimmt. Beim herkömmlichen Direktantrieb mit Torquemotor erstreckt sich die Antriebswelle durch den als Hohlwelle ausgebildeten Rotor hindurch und ist jeweils seitlich vom Rotor an den beiden Stirnseiten des Gehäuses gelagert. Ein Drehwinkelgeber ist dann auf eine Stirnfläche der Antriebswelle aufgesetzt und steht so weit aus dem Gehäuse des Direktantriebs hervor, was zu einer größeren Baulänge des Direktantriebs führt. Außerdem kann der aus dem Gehäuse hervorstehende Drehwinkelgeber leicht beschädigt werden.

Aus der FR-A-2 624 699 ist ein Direktantrieb mit einem Gehäuse bekannt, in dem ein außen liegender Stator und ein innen liegender als Hohlwelle ausgebildeter Rotor über einen Luftspalt getrennt angeordnet sind. Hierbei ist der Rotor mit einer am Gehäuse gelagerten, sich mit einem Endabschnitt durch den Rotor erstreckenden Antriebswelle fest verbunden Ferner ist ein Drehwinkelgeber drehfest an der Antriebswelle angeordnet. Bei dieser vorbekannten Maschine ist vorgesehen, dass der sich in dem Rotor erstreckende Endabschnitt der Antriebswelle eine Ausnehmung aufweist, in der der Drehwinkelgeber angeordnet ist.

Die DE 102 28 856 A1 beschreibt einen Direktantrieb für eine Drosselklappenwelle in einem Drosselklappenstutzen. Dieser Antrieb besteht aus einer Spule und einem direkt neben der Spule angeordneten Rotor. Der Rotor besteht aus einem Stahlring, in dem innen eine erste innere Magnetschale und eine zweite innere Magnetschale zueinander gegenüberliegend anliegen. Auf der Außenseite weist der Stahlring eine erste äußere Magnetschale und eine zweite äußere Magnetschale auf, die zueinander gegenüberliegend anliegen. An seinem der Drosselklappe zugewandten Ende ist der Stahlring mit der Drosselklappenwelle verbunden. Im Bereich des von der Drosselklappe abgewandten Endes des Stahlrings ist mittig ein Sensor zur Positionserkennung der Drosselklappe angeordnet.

Aufgabe der vorliegenden Erfindung ist es, eine Verkleinerung des Bauraums eines Direktantriebs mit Drehwinkelgeber zu erreichen.

Dies wird erfindungsgemäß mit einem Direktantrieb gemäß Anspruch 1 gelöst. Bevorzugte Weiterbildungen sind in den abhängigen Ansprüchen angegeben.

Der erfindungsgemäße Direktantrieb mit einem Torquemotor, bei dem der Rotor als innen liegende Hohlwelle ausgebildet ist, durch die sich die Antriebswelle erstreckt, zeichnet sich dadurch aus, dass der sich in den Rotor erstreckende Endabschnitt der Antriebswelle zweiteilig ausgelegt, mit einem T-förmigen vorderen Teil und einem als hülsenförmigen bzw. Hohlwelle ausgebildeten hinteren Teil, die jeweils getrennt am Rotor befestigt und am Gehäuse gelagert sind, wobei der Drehwinkelgeber der Antriebswelle im hülsenförmigen hinteren Teil der Antriebswelle angeordnet und drehfest am vorderen Teil der Antriebswelle befestigt ist. Hierdurch ist es möglich, den Drehwinkelgeber im Inneren des Direktantriebs anzubringen und somit die Baulänge des Direktantriebs auf dessen Gehäuselänge zu verkürzen. Weiterhin ist durch die Anbringung des Drehwinkelgebers innerhalb des Direktantriebs dieser gegen Beschädigung wesentlich besser geschützt. Diese Auslegung der Antriebswelle ermöglicht eine besonders kompakte Bauform, da durch die Teilung der Antriebswelle ein großer Einbauraum für den Drehwinkelgeber in der Antriebswelle verbleibt.

Gemäß einer bevorzugten Ausführungsform ist der sich in den Rotor erstreckende Endabschnitt der Antriebswelle mit einem vorderen Loslager und einem hinteren Festlager am Gehäuse gelagert. Mit dieser Auslegung wird auf einfache Weise eine exakte, insbesondere Temperatur-kompensierende Lagerung und Positionierung erreicht.

Bevorzugt ist es weiterhin, dass ein am Gehäuse angeflanschter topfförmiger Einsatz vorgesehen ist, in dem der Drehwinkelgeber angeordnet ist. Hierdurch wird eine geschützte Anordnung des Drehwinkelgebers im Direktantrieb erreicht, wobei der Drehwinkelgeber über den offenen topfförmigen Einsatz leicht zugänglich bleibt.

Gemäß einer weiteren bevorzugten Ausführungsform ist der Drehwinkelgeber ein Drehgeber, der eine Drehachse aufweist, die fest mit der Antriebswelle verbunden ist. Die Verwendung eines Drehgebers mit Drehachse ermöglicht eine kostengünstige Drehwinkelgeberauslegung. Dabei ist die Drehachse des Drehgebers bevorzugt mit einem mittig in der Antriebswelle vorgesehenen Einsatz drehfest verbunden, was eine einfache Montage des Drehgebers an der Antriebswelle ermöglicht.

Bevorzugt ist es weiterhin, den Direktantrieb zum Antrieb einer Walze einzusetzen, wobei die Antriebswelle über eine verdrehsteife Kupplung mit der Walze verbunden ist. Die Anbindung des Direktantriebs an die Walze über eine verdrehsteife Kupplung ermöglicht ein einfaches Fluchten von Antriebswelle und Walze bei gleichzeitiger Möglichkeit, axiale Verschiebungen zwischen Antriebswelle und Walze über die drehsteife Kupplung auszugleichen.

Die Erfindung wird anhand der beigefügten Zeichnungen näher erläutert. Es zeigen:
Figur 1 eine Vorschubwalzenanordnung im Längsschnitt, bestehend aus zwei Walzen, die jeweils über einen erfindungsgemäßen Direktantrieb angetrieben werden; und
Figur 2 eine vergrößerte Ansicht des erfindungsgemäßen Direktantriebs im Längsschnitt entlang der A-A-Linie, in der Aufsicht und in Explosionsdarstellung.

Der erfindungsgemäße Direktantrieb wird am Beispiel einer Vorschubwalzenanordnung, wie sie in Folienzieh- oder Druckmaschinen eingesetzt wird, dargestellt. Der erfindungsgemäße Direktantrieb kann jedoch als Antrieb in beliebigen Industrieanwendungen eingesetzt werden, bei denen insbesondere ein hohes Drehmoment bei kleiner Drehzahl gefordert sind.

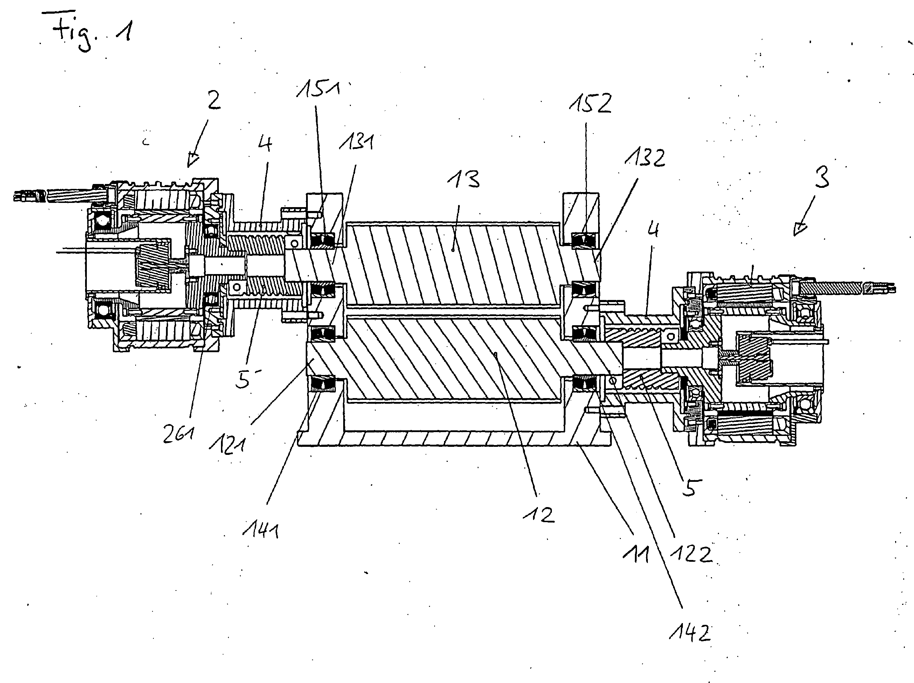

Figur 1 zeigt im Längsschnitt eine Vorschubwalzenanordnung 1, mit einem im Querschnitt im Wesentlichen U-förmigen Gehäuse 11, in dem übereinander durch einen Förderspalt beabstandet zwei Walzen 12, 13 angeordnet sind. Die beiden Walzen 12, 13 weisen jeweils seitlich vorstehend Wellen 121, 122, 131, 132 auf, die jeweils mithilfe eines Axiallagers 141, 142, 151, 152 am Gehäuse 11 drehbar gelagert sind. Jede der beiden Walzen wird getrennt von einem Direktantrieb 2, 3 angetrieben.

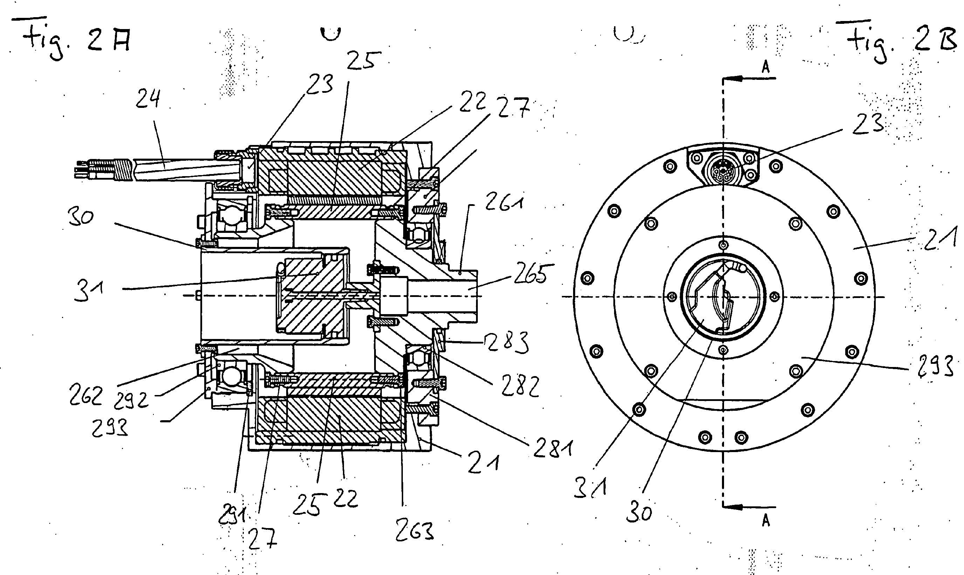

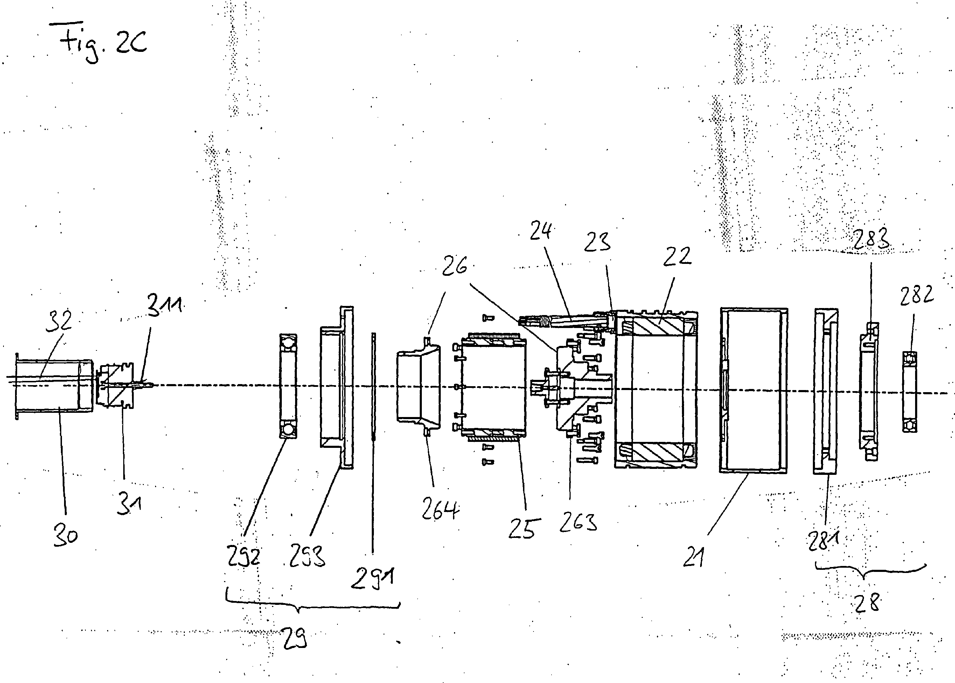

Figur 2 zeigt den linken Direktantrieb in vergrößerter Darstellung, wobei Figur 2A einen Längsschnitt, Figur 2B eine rückwärtige Aufsicht und Figur 2C den Direktantrieb in Explosionsdarstellung zeigen. Der Direktantrieb 2 ist als permanent erregter rotatorischer Direktantrieb gemäß dem Torquemotorprinzip mit einer hohen Leistungsdichte und einer kompakten Bauform ausgelegt. Der Direktantrieb ist in einem zylindrischen Gehäuse 21 untergebracht, bei dem der Durchmesser im Verhältnis zu seiner Länge relativ groß ist. Im Gehäuse 21 angeordnet und fest mit diesem verbunden ist ein zylinderförmiges Statorpacket 22 mit einer hochpoligen Ständerwicklung. Der Stator 22 verfügt über einen seitlichen Stromanschluss 23, über den ein mehradriges Stromkabel 24 an den Stator angeschlossen ist. Der über das Stromkabel zugeführte Motorstrom sorgt in den Statorwicklungen für ein umlaufendes Magnetfeld.

Im fest mit dem Gehäuse 21 verbundenen zylinderförmigen Stator 22 ist über einen Luftspalt beabstandet ein ebenfalls zylinderförmiges Rotorpacket 25 mit außen liegenden blättchenförmigen Magneten angeordnet, das durch das umlaufende Magnetfeld in eine Drehbewegung versetzt wird. Der Rotor 25 wiederum ist fest mit einer Antriebswelle 26 verbunden. Diese Antriebswelle 26 ist zweiteilig ausgelegt, mit einem vorderen T-förmigen Wellenabschnitt 261 und einem hinteren hülsenförmigen Wellenabschnitt 262. Der T-förmige Wellenabschnitt 261 wiederum weist eine dreistufige Mantelfläche auf, wobei an einem ersten Stufenabschnitt ein außen liegender Befestigungsring 263 angeordnet ist, der an einer ersten Stirnfläche des Rotors 25 anliegt und mit dieser über Zylinderschrauben 27 verschraubt ist. Der hülsenförmige Wellenabschnitt 262 ist leicht konisch zulaufend ausgebildet und mit einem Befestigungsring 264 versehen, der über Zylinderschrauben 27 mit einer zweiten Stirnfläche des Rotors 25 verschraubt ist.

Der vordere T-förmige Antriebswellenabschnitt 261 ist über ein dreiteilig ausgebildetes Loslager 28 im vorderen Bereich des Gehäuses 21 vor dem Stator 22 gelagert. Das Loslager 28 weist dabei einen ringförmigen Einsatz 281 auf, der mit dem Gehäuse 21 verbunden ist. Zwischen diesem Lagereinsatz 281 und dem T-förmigen Antriebswellenabschnitt 261 ist ein ringförmiges Kugellager 282 axial beweglich angeordnet, das von einem ringförmigen Lagerdeckel 283 verschlossen wird. Die axial bewegliche Anordnung des Loslagers 28 sorgt für ein ausreichendes Spiel, um insbesondere Temperaturausdehnungen der Antriebswelle bzw. des Motorgehäuses beim Betrieb auszugleichen. Das T-förmige Antriebswellenabschnitt 261 ist über das Loslager 28 so am Gehäuse 21 gelagert, dass es über den Lagerdeckel 283 mit seinem vorderen Stufenabschnitt vorsteht.

Der hintere hülsenförmige Antriebswellenabschnitt 262 ist über ein dreiteiliges Festlager 29 am Gehäuse 21 gelagert. Das dreiteilige Festlager weist einen Gehäusesicherungsring 291 auf, der den Antriebswellenabschnitt 262 mit dem daran befestigten Rotor 25 axial am Gehäuse 21 sichert. Auf diesem Sicherungsring 291 sitzt zwischen dem Gehäuse 21 und dem hinteren Antriebswellenabschnitt 262 ein Kugellager 292, das wiederum von einem ringförmigen Lagerdeckel 293 gehalten wird. Im hohlwellenförmigen Antriebsteil 262 ist weiterhin ein topfförmiger Einsatz 30 angeordnet, der fest an den Lagerdeckel 293 des Festlagers 29 angeflanscht ist.

Im topfförmigen Einsatz 30 wiederum ist ein zylindrischer Drehwinkelgeber 31 angeordnet. Dieser zylindrische Drehwinkelgeber 31 ist in der gezeigten Ausführungsform als Absolutdrehgeber ausgelegt und weist eine vorstehende Drehachse 311 auf, die sich im Eingriff mit einem Einsatz 265 in dem T-förmigen Antriebswellenabschnitt 261 befindet. Dieser Drehwinkelgeber 31 dient dazu, den Drehwinkel der Antriebswelle 26 und des daran befestigten Rotors 25 zu erfassen und in ein elektrisches Signal umzusetzen, das über ein aus dem topfförmigen Einsatz vorstehendes Kabel 32 einer Kommutiersteuerung (nicht gezeigt) zugeführt wird. Diese Kommutiersteuerung, an der wiederum auch das Motorstromkabel 24 angeschlossen ist, steuert auf der Grundlage der sich ergebenden Position der Antriebswelle mit dem daran angeordneten Rotor die phasenrichtige Bestromung der Statorwicklung, und somit die Motordrehzahl und das Drehmoment.

Beim als Absolutdrehgeber ausgebildeten Drehwinkelgeber 31 erfolgt die Abtastung der Winkelposition der Antriebswelle 26 berührungslos und verschleißfrei über optische Elemente. An der Drehachse 311 des Absolutdrehgebers, die über den Einsatz 265 drehfest mit der Antriebswelle 29 verbunden ist, ist eine Codescheibe angeordnet, die mit Licht durchstrahlt wird. Das sich auf einer feststehenden Blende im Absolutdrehgeber dann ergebende Hell-Dunkel-Muster, das die Winkelposition der Antriebswelle angibt, wird in ein elektrisches Signal umgewandelt und zur weiteren Signalverarbeitung an die Kommutiersteuerung übermittelt. Der Drehgeber kann statt als Absolutdrehgeber auch als Singleturngeber oder Resolver oder Zahnradgeber ausgeführt sein.

Durch die erfindungsgemäße Anordnung des Drehwinkelgebers direkt im Antrieb selbst lässt sich ein hochkompakter Aufbau des Direktantriebs mit einer sehr kurzen Baulänge realisieren. Weiterhin ist der Drehgeber durch die innen liegende Anordnung im Direktantrieb gegen Beschädigungen geschützt. Anstelle des gezeigten Absolutdrehgebers können auch andere Drehwinkelgeber, z.B. Hohlwellengeber eingesetzt werden. Ein solcher Hohlwellengeber würde dann die über einen dafür vorgesehenen wellenförmigen Abschnitt am vorderen Antriebswellenabschnitt drehfest aufgeschoben werden, um die Drehbewegung der Antriebswelle zu erfassen. Alternativ zu dem gezeigten zweiteiligen Aufbau der Antriebswelle besteht auch die Möglichkeit, die Antriebswelle einteilig auszulegen mit einer rückwärtigen Ausnehmung, in der dann der Drehgeber mit seinem topfförmigen Einsatz eingesetzt ist.

Die beiden in Figur 1 gezeigten permanent erregten rotatorischen Direktantriebe 2, 3 sind über ein zylindrisches Flanschgehäuse 4 mit dem Gestell 11 der Vorschubwalzenanordnung verschraubt. Das vordere T-förmige Antriebswellenteil 261 ist dabei über eine verdrehsteife Kupplung 5 mit dem Wellenfortsatz 131 der zugehörigen Walze 13 fest verbunden. Die verdrehsteife Kupplung 5 sorgt für ein zuverlässiges Fluchten der Antriebswelle 29 und der Walze 13 und gleicht darüber hinaus axiale Verschiebungen zwischen Walze 13 und Antriebswelle 29 aus.

Die beiden Direktantriebe 2, 3 sind über ihre Kommutatorsteuerungen (nicht gezeigt) synchronisiert, um die beiden Vorschubwalzen 12, 13 synchron anzutreiben. Der Antrieb der Walzen erfolgt dabei so, dass die Statorwicklungen über die zugehörigen Kommutatorsteuerungen des Direktantriebs umlaufend mit Motorstrom versorgt werden, wobei die Umschaltgeschwindigkeit die Drehzahl bestimmt. Das sich in den Statorwicklungen bildende umlaufende Magnetfeld erzeugt ein entsprechendes Drehfeld im Rotor, wobei das Drehmoment proportional zum eingespeisten Motorstrom ist. Dieses Drehmoment wird dann vom Rotor auf die Antriebswelle und von dort über die verdrehsteife Kupplung auf die Walze übertragen. Der innen liegende Drehwinkelgeber des Direktantriebs, der mit der Antriebswalze verbunden ist, tastet dabei die Winkelstellung der Antriebswelle und damit die Rotorposition ab, um über eine Rückkopplung auf die Kommutiersteuerung die Drehzahl und das Drehmoment einzustellen.

### Bezugszeichenliste

- 11: Gehäuse
- 12, 13: Walze
- 121, 122, 131, 132: Walzenwellen
- 141, 142, 151, 152: Axiallager
- 21: Gehäuse
- 22: Stator
- 23: Stromanschluss
- 24: Stromkabel
- 25: Rotor
- 26: Antriebswelle
- 261, 262: Antriebswellenabschnitt
- 263, 264: Befestigungsring
- 265: Einsatz
- 27: Zylinderschrauben
- 28: Loslager
- 281: Einsatz (Loslager)
- 282: Kugellager (Loslager)
- 283: Lagerdeckel (Loslager)
- 29: Festlager
- 291: Gehäusesicherungsring (Festlager)
- 292: Kugellager (Festlager)
- 293: Lagerdeckel (Festlager)
- 30: Einsatz
- 31: Drehwinkelgeber
- 311: Drehachse (Drehwinkelgeber)
- 32: Kabel (Drehwinkelgeber)
- 4: Flansch
- 5: Kupplung

## Patentansprüche

1. Direktantrieb mit einem Gehäuse (21), in dem ein außen liegender Stator (22) und ein innen liegender als Hohlwelle ausgebildeter Rotor (25) über einen Luftspalt getrennt angeordnet sind, wobei der Rotor mit einer am Gehäuse gelagerten, sich mit einem Endabschnitt durch den Rotor erstreckenden Antriebswelle (26) fest verbunden ist und wobei ein Drehwinkelgeber (31) drehfest an der Antriebswelle angeordnet ist, wobei der sich in den Rotor (25) erstreckende Endabschnitt der Antriebswelle (26) eine Ausnehmung aufweist, in der der Drehwinkelgeber angeordnet ist, **dadurch gekennzeichnet, dass** der sich in den Rotor (25) erstreckende Endabschnitt der Antriebswelle (26) zweiteilig ausgelegt ist, mit einem T-förmigen vorderen Teil (261) und einem hülsenförmigen hinteren Wellenabschnitt (262), die jeweils getrennt am Rotor befestigt und am Gehäuse (21) gelagert sind, wobei der Drehwinkelgeber (31) im hülsenförmigen hinteren Teil der Antriebswelle angeordnet und drehfest am vorderen Teil der Antriebswelle befestigt ist.

2. Direktantrieb nach Anspruch 1, **dadurch gekennzeichnet, dass** der sich in den Rotor (25) erstreckende Endabschnitt der Antriebswelle (26) mit einem vorderen Loslager (28) und einem hinteren Festlager (29) am Gehäuse (21) gelagert ist.

3. Direktantrieb nach einem der Ansprüche 1 bis 2, **dadurch gekennzeichnet, dass** ein am Gehäuse (21) angeflanschter topfförmiger Einsatz (30) vorgesehen ist, in dem der Drehwinkelgeber (31) angeordnet ist.

4. Direktantrieb nach einem der Ansprüche 1 bis 3, **dadurch gekennzeichnet, dass** der Drehwinkelgeber (31) ein Drehgeber ist, der eine Drehachse (311) aufweist, die fest mit der Antriebswelle verbunden ist.

5. Direktantrieb nach Anspruch 4, **dadurch gekennzeichnet, dass** die Antriebswelle (26) mittig einen Einsatz (265) aufweist, in den die Drehachse (311) des Drehgebers (31) eingreift.

6. Direktantrieb nach Anspruch 4 oder 5, **dadurch gekennzeichnet, dass** der Drehgeber (31) als Absolutdrehgeber oder Singleturngeber oder Resolver oder Zahnradgeber ausgeführt ist.

7. Direktantrieb nach einem der Ansprüche 1 bis 6 zum Antrieb einer Walze (12), **dadurch gekennzeichnet, dass** die Antriebswelle (29) über eine verdrehsteife Kupplung (5) mit der Walze (12) verbunden ist.

## Claims

1. Direct drive with a housing (21) in which an outer stator (22) and an inner rotor (25) designed as a hollow shaft are arranged, separated via an air gap, the rotor being connected fixedly to a drive shaft (26) mounted on the housing and extending with an end portion through the rotor, and a rotary-angle transducer (31) being arranged fixedly in terms of rotation on the drive shaft, that end portion of the drive shaft (26) which extends into the rotor (25) having a recess in which the rotary-angle transducer is arranged, **characterized in that** that end portion of the drive shaft (26) which extends into the rotor (25) is designed in two parts, with a T-shaped front part (261) and with a sleeve-shaped rear shaft portion (262) which are in each case fastened separately to the rotor and mounted on the housing (21), the rotary-angle transducer (31) being arranged in the sleeve-shaped rear part of the drive shaft and being fastened fixedly in terms of rotation to the front part of the drive shaft.

2. Direct drive according to Claim 1, **characterized in that** that end portion of the drive shaft (26) which extends into the rotor (25) is mounted on the housing (21) by means of a front loose bearing (28) and a rear fixed bearing (29).

3. Direct drive according to either one of Claims 1 and 2, **characterized in that** a pot-shaped insert (30) is provided which is flanged on the housing (21) and in which the rotary-angle transducer (31) is arranged.

4. Direct drive according to one of Claims 1 to 3, **characterized in that** the rotary-angle transducer (31) is a rotary transducer having a rotary axle (311) which is connected fixedly to the drive shaft.

5. Direct drive according to Claim 4, **characterized in that** the drive shaft (26) has centrally an insert (265) into which the rotary axle (311) of the rotary transducer (31) engages.

6. Direct drive according to Claim 4 or 5, **characterized in that** the rotary transducer (31) is designed as an absolute rotary transducer or single-turn transducer or resolver or gear transducer.

7. Direct drive according to one of Claims 1 to 6 for driving a roller (12), **characterized in that** the drive shaft (29) is connected to the roller (12) via a non-twist coupling (5).

## Revendications

1. Entraînement direct comportant un boîtier (21) logeant un stator extérieur (22) et un rotor intérieur (24) en forme d'arbre creux, séparés par un entrefer,
le rotor étant relié solidairement à un arbre d'entraînement (26) dont le segment d'extrémité traverse le rotor et qui est monté dans le boîtier, et un détecteur d'angle de rotation (31) est solidaire en rotation de l'arbre d'entraînement,
le segment d'extrémité de l'arbre d'entraînement (26) qui pénètre dans le rotor (25) comporte une cavité logeant un capteur d'angle de rotation, **caractérisé en ce que**
le segment d'extrémité de l'arbre d'entraînement (26) qui s'étend dans le rotor (25) est formé de deux parties, une partie avant (261) en forme de T et un segment d'arbre (262), arrière, en forme de manchon, ces parties étant fixée séparément au rotor et montées dans le boîtier (21),
le détecteur d'angle de rotation (31) étant logé dans la partie arrière en forme de manchon de l'arbre d'entraînement est fixé solidairement en rotation à la partie avant de l'arbre d'entraînement.

2. Entraînement direct selon la revendication 1,
**caractérisé en ce que**
le segment d'extrémité de l'arbre d'entraînement (26) qui arrive dans le rotor (25) est monté dans le boîtier (21) par un palier avant (28) libre et un palier arrière (29) fixe.

3. Entraînement direct selon l'une quelconque des revendications 1 et 2,
**caractérisé en ce qu'**
un insert (30) en forme de pot, fixé par bride au boîtier (21) reçoit le détecteur d'angle de rotation (31).

4. Entraînement direct selon l'une quelconque des revendications 1 à 3,
**caractérisé en ce que**
le détecteur d'angle de rotation (31) est un détecteur de rotation ayant un axe de rotation (311) relié solidairement à l'arbre d'entraînement.

5. Entraînement direct selon la revendication 4,
**caractérisé en ce que**
l'arbre d'entraînement (25) présente en son milieu un insert (265) dans lequel pénètre l'axe de rotation (311) du détecteur de rotation (31).

6. Entraînement direct selon l'une quelconque des revendications 4 ou 5,
**caractérisé en ce que**
le détecteur de rotation (31) est un détecteur de rotation absolu ou un détecteur de tour unique ou un résolveur ou un détecteur à roues dentées.

7. Entraînement direct selon l'une quelconque des revendications 1 à 6, pour l'entraînement d'un cylindre (12),
**caractérisé en ce que**
l'arbre d'entraînement (21) est relié au cylindre (12) par un embrayage (5) solidaire en rotation.
